## Europäisches Patentamt
## European Patent Office
## Office européen des brevets

(11) Veröffentlichungsnummer: **0 111 114 A2**

(12) **EUROPÄISCHE PATENTANMELDUNG**

(21) Anmeldenummer: 83110405.4

(22) Anmeldetag: 19.10.83

(51) Int. Cl.³: **H 04 Q 3/62**
H 04 M 11/00, H 04 L 11/00

(30) Priorität: 06.11.82 DE 3240999

(43) Veröffentlichungstag der Anmeldung:
20.06.84 Patentblatt 84/25

(84) Benannte Vertragsstaaten:
AT BE IT

(71) Anmelder: Telefonbau und Normalzeit GmbH
Mainzer Landstrasse 128-146 Postfach 4432
D-6000 Frankfurt (Main)(DE)

(72) Erfinder: Kessler, Arthur, Ing. grad.
Am Gassgang 28
D-6370 Oberursel(DE)

(72) Erfinder: Bohland, Helmut, Ing. grad.
Egerländerstrasse 6
D-6277 Camberg(DE)

(72) Erfinder: Leicher, Gerhard, Dipl.-Ing.
Giessfeldstrasse 2
D-6000 Frankfurt/Main(DE)

(72) Erfinder: Reichel, Helmut, Dipl.-Ing.
Seligenstädter Strasse 19
D-6450 Hanau 8(DE)

(72) Erfinder: Heussner, Udo, Dipl.-Ing.
Neue Strasse 1a
D-6054 Rodgau 5(DE)

(72) Erfinder: Theis, Harald, Dipl.-Ing.
Leipnizerstrasse 33
D-6500 Mainz 1(DE)

(54) Schaltungsanordnung für eine Fernsprechvermittlungsanlage, insbesondere Fernsprechnebenstellenanlage mit zusätzlichem Datenverkehr.

(57) Zur Abwicklung eines zusätzlichen Datenverkehrs, beispielsweise mit Fernschreibern, in einer Fernsprechnebenstellenanlage ist ein besonderer Koppelfeldteil vorgesehen, an welchem die Anschlußschaltungen für interne und externe Anschlußleitungen angeschlossen sind. Der besondere Koppelfeldteil und die Anschlußschaltungen sind außerdem mit der Steuereinrichtung der Fernsprechnebenstellenanlage verbunden.

./...

Croydon Printing Company Ltd.

Fig.1

Telefonbau und Normalzeit GmbH, Postfach 44 32,
6000 Frankfurt /Main

1

Schaltungsanordnung für eine Fernsprechvermittlungsanlage,
insbesondere Fernsprechnebenstellenanlage mit zusätzlichem
Datenverkehr
_____

Die Erfindung betrifft eine Schaltungsanordnung für eine
Fernsprechvermittlungsanlage mit Fernsprechanschlußschaltungen, Fernsprechleitungsübertragungen, einer Steuereinrichtung und einem Koppelfeld, insbesondere Fernsprechnebenstellenanlagen mit zusätzlichem Datenverkehr, wobei die Datenendeinrichtungen ebenso wie Fernsprechteilnehmer an der Fernsprechnebenstellenanlage angeschlossen und neben den üblichen
Leitungsübertragungen für den Fernsprechverkehr besondere
Leitungsübertragungen für den Datenverkehr vorgesehen sind,
welche zur Abwicklung des externen Datenverkehrs mit einer
Datenvermittlungsanlage dienen, wobei in den Leitungsübertragungen für Datenverkehr Einrichtungen zum Empfang, zur Umsetzung und Weiterleitung von Leitungszeichen und Dateninformationen der einen Vermittlungsanlage in die der anderen
Vermittlungsanlage und umgekehrt vorgesehen sind.

Im Rahmen der Bürokommunikation wird dazu übergegangen, die
normalen Büroschreibmaschinen mit zusätzlichen Merkmalen auszustatten, wodurch diese dann auch als Fernschreibmaschinen
benutzt werden können und zur Abwicklung der Korrespondenz
über ein besonderes Netz oder das bereits bestehende Fernschreibnetz dienen. Ein derartiger Dienst ist auch unter dem
Namen "Teletex" bekannt. Nähere Einzelheiten lassen sich
einem Vorabdruck aus dem Jahrbuch der Deutschen Bundespost,
1981, unter dem Titel "Teletex, ein neuer internationaler
Fernmeldedienst für die Textkommunikation, Verlag für Wissenschaft und Leben, Georg Heidecker, Bad Windsheim, 1981, entnehmen.

Da spezielle Fernschreib- Nebenstellenanlagen im Gegensatz zu Fernsprech- Nebenstellenanlagen wenig verbreitet sind, bietet sich an, den neuen Fernmeldedienst über die Fernsprechnebenstellenanlage abzuwickeln. Hierzu sind jedoch besondere Maßnahmen notwendig. In der DE-OS 28 37 654 wird eine Schaltungsanordnung für Fernsprechvermittlungssysteme, insbesondere Fernsprechnebenstellenanlagen, mit zusätzlichem Datenverkehr, z. B. Fernschreibern, beschrieben, bei welcher an einer Teilnehmeranschlußleitung eine Datenübertragungseinrichtung angeschlossen ist, welche eine Umschalteeinrichtung aufweist, mit deren Hilfe alternativ ein Fernsprechapparat oder ein Fernschreiber anschließbar ist. Zur Abwicklung des externen Datenverkehrs ist ein besonderer Verbindungssatz vorgesehen, welcher von einem Teilnehmeranschluß durch Wahl einer besonderen Rufnummer erreichbar ist. Da ein Teilnehmeranschluß der Fernsprechnebenstellenanlage und auch das Koppelnetz sowohl zum Fernsprechen als auch zum Fernschreiben benutzt wird und zur Unterscheidung zwischen einer Fernsprechverbindung und einer Fernschreibverbindung unterschiedliche Rufnummern zu wählen sind und die Umschaltung vom Fernsprech- auf den Fernschreib- oder Datenverkehr manuell erfolgt, ist infolge einer irrtümlichen Bedienung eine ordnungsgemäße Betriebsabwicklung nicht immer sichergestellt.

Die Aufgabe der Erfindung besteht nun darin, eine Schaltungsanordnung für eine Fernsprechnebenstellenanlage anzugeben, welche eine sichere Betriebsabwicklung ermöglicht.

Diese Aufgabe wird dadurch gelöst, daß zum Anschluß von Datenendeinrichtungen und externen Datenleitungen individuelle Anschlußschaltungen vorgesehen sind, welche eine erste Schnittstelle zum Anschluß einer Datenendeinrichtung bzw. einer externen Datenleitung, eine zweite Schnittstelle zum Anschluß an das Koppelfeld und eine dritte Schnittstelle zum Anschluß an die Steuereinrichtung aufweisen, wobei die zweite und die dritte Schnittstelle gleichartig wie bei den Fernsprechanschlußschaltungen bzw. Fernsprechleitungsübertragungen ausgebildet sind und die Leistungsmerkmale für den Fernsprechverkehr in gleicher Weise für den Datenverkehr zur Verfügung
stehen, wobei durch geeignete Mittel sichergestellt ist,
daß Verbindungen zwischen Fernsprech- und Datenanschlüssen
verhindert sind.

Die erfindungsgemäßen Anschlußschaltungen, welche ausschließlich zur Abwicklung des Datenverkehrs dienen, sind ebenso wie
die Einrichtungen zur Abwicklung des Fernsprechverkehrs am
Koppelfeld und an der Steuereinrichtung der Fernsprechnebenstellenanlage angeschlossen, so daß die Steuervorgänge zum
Auf- und Abbau von Verbindungen zur Abwicklung des Fernsprechverkehrs oder zur Abwicklung des Datenverkehrs gleich sind,
wobei beispielsweise durch die Verwendung von besonderen
Betriebskennzeichen im Rahmen der Teilnehmerberechtigung
quasi zwei Vermittlungsanlagen mit einer gemeinsamen Steuereinrichtung betrieben werden.

Eine Weiterbildung der Erfindung besteht darin, daß an einem
ersten Teil des Koppelfeldes die Einrichtungen für den Fernsprechverkehr und an einem zweiten Teil des Koppelfeldes die
Einrichtungen für den Datenverkehr angeschlossen sind, wobei
beide Koppelfeldteile von der Steuereinrichtung eingestellt
werden. Durch die funktionsmäßige Aufteilung des Koppelfeldes
wird der Steuerungsablauf für den Verbindungsaufbau vereinfacht, da in diesem Fall auch auf besondere Betriebskennzeichen verzichtet werden kann, da eine Untereinanderverbindung von Ein- und Ausgängen der beiden Koppelfeldteile nur
jeweils innerhalb eines Koppelfeldteiles möglich ist.

Eine Weiterbildung der Erfindung besteht auch darin, daß der
zweite Koppelfeldteil zusammen mit den Anschlußschaltungen
in einer Zusatzbaugruppe untergebracht ist und diese Zusatzbaugruppe an einer Fernsprechnebenstellenanlage angeschlossen
ist, die für den Fernsprechverkehr entsprechend geringer ausgebaut ist. Dabei kleinen und mittleren Fernsprechnebenstellenanlagen eine unbeschränkte Erweiterbarkeit nicht gegeben ist, kann eine derartige Fernsprechnebenstellenanlage

nur dann für die Bewältigung des zusätzlichen Datenverkehrs umgerüstet werden, wenn die Zahl der Anschlußeinheiten (Teilnehmeranschlüsse, Verbindungssätze, Leitungssätze, usw.) für den Fernsprech- und den Datenverkehr den Maximalausbau der Fernsprechnebenstellenanlage nicht übersteigt. Die Zusatzbaugruppe ermöglicht sowohl die nachträgliche Umrüstung einer bereits installierten Fernsprechnebenstellenanlage für den zusätzlichen Datenverkehr als auch eine wirtschaftliche Fertigung derartiger Fernsprechnebenstellenanlagen. Weitere Vorteile ergeben sich aus den Unteransprüchen.

Die Erfindung wird anhand eines Ausführungsbeispiels näher erläutert, welches in der Zeichnung dargestellt ist. Es zeigt:

Fig. 1 das Blockschaltbild für eine Fernsprechnebenstellenanlage mit zusätzlichem Datenverkehr und

Fig. 2 das Blockschaltbild einer Anschlußschaltung.

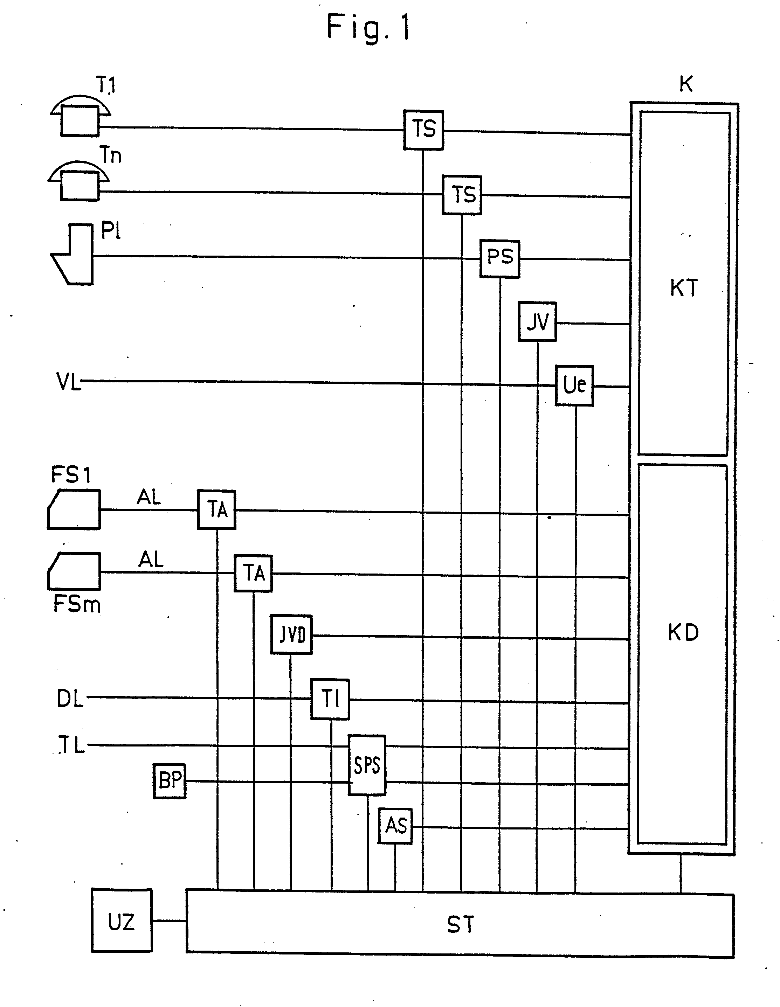

Bei dem in Fig. 1 gezeigten Blockschaltbild einer Fernsprechnebenstellenanlage kann es sich beispielsweise um eine solche handeln, wie sie in der Druckschrift TN-Nachrichten 1978, Heft 79, auf den Seiten 8 bis 14, beschrieben ist. An einem Koppelfeld K, und zwar an dem Koppelfeldteil KT sind Fernsprechteilnehmerstationen T1 bis Tn über Teilnehmeranschlußschaltungen TS, Vermittlungsplätze PL über jeweils eine Platzsteuerung PS, Verbindungsleitungen VL über Leitungsübertragungen LE und Verbindungssätze IV angeschlossen. Die Einrichtungen TS, PS, IV und Ue sind ebenso wie das Koppelfeld K mit einer übergeordneten Steuereinrichtung ST verbunden. Auf diesem Wege erhält die Steuereinrichtung ST Informationen aus der Peripherie, welche zum Verbindungsauf- und -abbau benötigt werden. Die Verbindungen der Anschlüsse untereinander erfolgt durch das Koppelfeld K, welches seine Einstellbefehle von der Steuereinrichtung ST erhält.

0111114

Die Anwendung der Erfindung ist jedoch nicht auf eine derartige Fernsprechnebenstellenanlage mit einem Raumkoppelfeld beschränkt, sie ist auch auf Fernsprechnebenstellenanlagen mit einer zeitmultiplexen Durchschaltung der Sprechwege anwendbar.

Zur Abwicklung des Datenverkehrs weist das Koppelfeld K einen weiteren Koppelfeldteil KD auf, an welchem die für den Datenverkehr benötigten Einrichtungen angeschlossen sind. Hierzu zählen Anschlußschaltungen TA zum Anschluß jeweils einer Anschlußleitung AL, Anschlußschaltungen TI, welche zum Anschluß jeweils einer Datenleitung DL dienen, Innenverbindungssätze IVD und ein oder mehrere Informationsspeicher SPS. Die Informationsspeicher SPS können als Umsetzer für Codes oder Geschwindigkeiten oder für andere Zwecke dienen. Die Fernschreiber oder auch Bürofernschreiber FS1 bis FSm sind jeweils mit einer individuellen Anschlußleitung AL verbunden. Die Datenleitung DL führt zur Datenvermittlungsstelle, dabei kann es sich beispielsweise um eine Fernschreibvermittlungsstelle des öffentlichen Netzes handeln. Die Einrichtungen TA, TI, IVD und SPS sind ebenfalls mit der Steuereinrichtung ST verbunden, wobei über diese Verbindungen ebenfalls die in der Peripherie auftretenden Kriterien an die Steuereinrichtung ST übermittelt werden und aufgrund dieser Informationen die Durchschaltung von Verbindungen innerhalb des Koppelfeldes K durch die Steuereinrichtung ST veranlaßt wird.

Bei der Beschreibung des Ausführungsbeispiels wird davon ausgegangen, daß Fernschreiber an der Fernsprechnebenstellenanlage angeschlossen sind. Anstelle dieser Fernschreiber können ohne weiteres auch andere Datenendeinrichtungen, wie beispielsweise Bürofernschreibmaschinen, Teletexanschlußgeräte, Textautomaten, usw., treten.

Die Steuerungsabläufe innerhalb der Steuereinrichtung ST sind für den Fernsprechverkehr und den Datenverkehr die gleichen. Die Vergabe von Adressen (Anschlußnummern) kann freizügig erfolgen, d. h. eine bestimte Adresse, welche normalerweise für einen Fernsprechanschluß benutzt wird, kann ohne weiteres einem Fernschreibanschluß zugeteilt werden, wenn nicht eine Teilnehmeranschlußschaltung TS sondern eine Anschlußschaltung TA oder TI am Koppelfeld K angeschlossen wird. Der betreffende Anschluß fällt dann in den Koppelfeldteil KD, während er im Falle eines Fernsprechteilnehmeranschlusses in das Koppelfeld KT fallen würde. Aus steuerungstechnischen Gründen wird es angebracht sein, die Einrichtungen für den Datenverkehr unter fortlaufenden Adressen zusammenzufassen, beispielsweise derart, daß die im Vollausbau benutzten Adressen belegt werden, damit bei Erweiterung des Fernsprechteils keine Adressensprünge auftreten. Werden alle Einrichtungen für den Datenverkehr in einer Zusatzbaugruppe zusammengefaßt, so läßt sich diese Zusatzbaugruppe nachträglich leicht in eine bereits installierte Fernsprechnebenstellenanlage einbauen.

Eine Aufteilung des Koppelfeldes K in ein Koppelfeldteil KT für den Fernsprechverkehr und ein Koppelfeldteil KD für den Datenverkehr ist nicht unbedingt notwendig, um auf diese Weise sicherzustellen, daß Verbindungen zwischen Fernsprech- und Datenanschlüssen verhindert sind. Der gleiche Effekt kann auch durch die Vergabe von besonderen Betriebskennzeichen für die Fernsprech- und Datenanschlüsse erzielt werden, wobei vor einem Verbindungsaufbau in der Steuereinrichtung ST eine Überprüfung der an der Verbindung beteiligten Anschlüsse durchgeführt wird. Die Betriebskennzeichen sind ebenso wie andere Berechtigungskennzeichen anschlußindividuell abgespeichert und werden der Steuereinrichtung zusammen mit weiteren die an der Verbindung beteiligten Anschlüsse betreffenden Informationen mitgeteilt.

0111114

Die Wirkungsweise der Fernsprechnebenstellenanlage zur Abwicklung des Datenverkehrs wird anhand von mehreren Beispielen näher erläutert:

1. <u>Internverbindung</u>

Es wird angenommen, daß zwischen den Fernschreibern FS1
und FSm eine Verbindung hergestellt werden soll, wobei
der Verbindungsaufbau durch den Fernschreibanschluß FS1
ausgelöst werden soll.Nach Belegung der Anschlußleitung
AL, die durch die Anschlußschaltung TA erkannt und an die
Steuereinrichtung ST gemeldet wird, wird vom Fernschreiber
FS1 die Rufnummer des gewünschten Teilnehmers FSm über die
Anschlußleitung AL ausgesendet, diese wird von der Anschlußschaltung TA empfangen und an die Steuereinrichtung ST
weitergegeben. Diese wählt einen freien Verbindungssatz
IVD aus und stellt fest, ob der gewünschte Teilnehmeranschluß frei ist. Ist dies der Fall, so wird der Fernschreibanschluß FS1 mit dem Fernschreibanschluß FSm über den Verbindungssatz IVD verbunden, und zwar geschieht dies auf
Veranlassung der Steuereinrichtung ST im Koppelfeldteil
KD des Koppelfeldes K. Die Auslösung der Verbindung wird
entweder in der Anschlußschaltung TA oder im Verbindungssatz
IV erkannt und an die Steuereinrichtung ST gemeldet, welche
die Auslösung des Verbindungsweges im Koppelfeldteil KD
veranlaßt.

2. <u>Abgehende Externverbindung</u>

Es wird angenommen, daß der Fernschreiber FS1 mit der
Datenleitung DL verbunden werden soll, um Daten zu einem
fernen Teilnehmer zu übermitteln. Nach Belegung der Anschlußleitung AL erfolgt die Übermittlung der Verkehrsausscheidungsziffer, die der Steuereinrichtung ST in bereits beschriebener Weise übermittelt wird und die Bereitstellung einer freien Anschlußschaltung TI zur Folge hat.
Die Verbindung derselben mit dem Fernschreiber FS1 erfolgt
wiederum auf Veranlassung der Steuereinrichtung ST im
Koppelfeldteil KD. Die Übermittlung der Rufnummer des
gewünschten fernen Teilnehmers kann nun entweder direkt über die durchgeschaltete Verbindung auf die Datenleitung DL oder in der bereits beschriebenen Weise erfolgen, wobei diese dann von der Steuereinrichtung ST an die Anschlußschaltung TI zur Weitergabe auf die Datenleitung DL übermittelt wird. Die Auslösung der Verbindung wird entweder in der Anschlußschaltung TA oder in der Anschlußschaltung TI bekannt und an die Steuereinrichtung ST gemeldet, welche darauf hin die Auftrennung des Verbindungsweges im Koppelfeldteil KD veranlaßt.

3. Ankommende Externverbindung

Bei einer ankommenden Externverbindung wird zunächst die Datenleitung DL belegt und das Belegungskriterium von der Anschlußschaltung TI an die Steuereinrichtung ST gemeldet. Nach Empfang der Rufnummer des gewünschten Teilnehmers, beispielsweise des Fernschreibers FS1, veranlaßt die Steuereinrichtung den Koppelfeldteil zur Durchschaltung einer entsprechenden Verbindung.

Ist der gewünschte Teilnehmeranschluß besetzt, so kann anstelle des Fernschreibers FS1 beispielsweise der Fernschreiber FSm verbunden werden. Bei diesem Fernschreiber kann es sich z. B. um eine Hauptstelle handeln, welcher im Besetztfall von Teilnehmeranschlüssen die betreffenden Verbindungen zugewiesen werden. Es ist jedoch auch denkbar, für Teilnehmeranschlüsse bestimmte Anschlüsse anzugeben, an welche ankommende Verbindungen im Besetztfall weiterzuleiten sind.

Eine weitere Möglichkeit besteht darin, im Besetztfall eines gewünschten Teilnehmeranschlusses die ankommenden Daten einem Informationsspeicher SPS zuzuführen, wo diese abgelegt werden, um dann bei Freiwerden des gewünschten Teilnehmeranschlusses demselben übermittelt zu werden. Die Verbindung zwischen der Datenleitung DL und dem Informationsspeicher SPS erfolgt auch in diesem Fall durch den Koppelfeldteil KD auf Veranlassung der Steuereinrichtung ST. Nachdem in dem Informations-

0111114

speicher SPS die Endeerkennung der übermittelten Nachricht erkannt und an die Steuereinrichtung ST übermittelt worden ist, veranlaßt letztere die Auslösung der Verbindung innerhalb des Koppelfeldteils KD. Dies ist auch der Fall, bei einer Auslösung einer Verbindung zwischen einer Datenleitung DL und einem Fernschreiber FS.

Das Übertragungsverfahren auf der Datenleitung DL und den Anschlußleitungen AL ist gleich, weshalb auch die Anschlußschaltung TA und TI in ihrem Aufbau identisch sind. Da zur Übermittlung der Informationen auf den Leitungen . DL und AL in der Regel mehr als zwei Adern benötigt werden und innerhalb des Koppelfeldes K nur eine zweiadrige Durchschaltung möglich ist, findet eine entsprechende Umsetzung in den Anschlußschaltungen TA und TI statt.

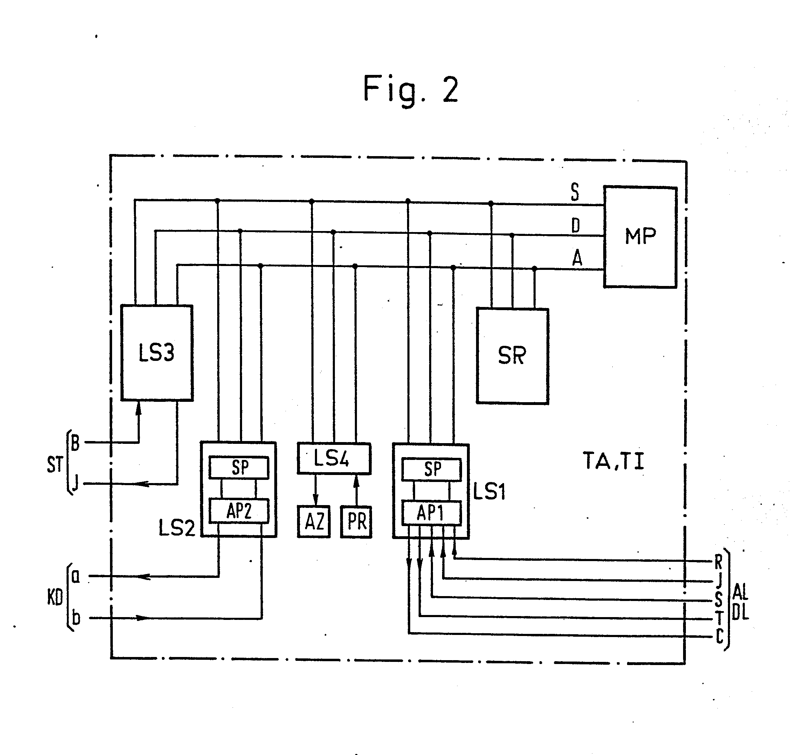

Der Aufbau und die Wirkungsweise der Anschlußschaltungen TA und TI wird anhand von Fig. 2 näher erläutert. Eine derartige Anschlußschaltung besteht aus einer Steuereinrichtung MP, einem Speicher SR und den Leitungsschnittstellen LS1 bis LS4, welche durch ein Leitungs- oder Bus-System bestehend aus den Leitungsvielfachen S (Steuerung) D, (Daten) A (Adressen) gebildet wird, miteinander verbunden sind. Die Steuereinrichtung MP kann auch als Mikroprozessor ausgebildet sein, wobei an dem Bus-System desselben neben dem Speicher SR entsprechende Ein/Ausgabe-Einrichtungen angeschlossen sind, welche mit den entsprechenden Leitungsschnittstellen LS verbunden sind.

Die Leitungsschnittstelle LS bildet die Schnittstelle zur Anschlußleitung AL bzw. zur externen Datenleitung DL. Bei dem Ausführungsbeispiel wird davon ausgegangen, daß auf den Leitungen AL bzw. DL eine Datenübertragung im Synchronbetrieb mit 2400 Bit/Sekunde stattfindet und daß die Schnittstelle gemäß der Schnittstelle X.21 nach CCITT ausgebildet ist. Über die Leitung R werden Daten empfangen, die Leitung I dient zum Anzeigen und Melden, über die Leitung S wird die Bittaktung übertragen, die Leitung T dient zur Aussendung der Daten und die Leitung C wird zur Übermittlung von Steuersignalen benutzt. Darüberhinaus sind weitere Leitungen, wie z. B. eine gemeinsame Erdleitung vorhanden. Die Schnittstelle X.21 wird in der Druckschrift " Data Report " 15 (1980) Heft 1, S. 35, beschrieben, so daß im Rahmen dieser Beschreibung nicht weiter darauf eingegangen wird.

An der Leitungsschnittstelle LS2 sind die Leitungen a und b angeschlossen, welche zum Koppelfeldteil KD führen. Dabei dient jeweils eine Leitung für eine Übertragungsrichtung. An der Leitungsschnittstelle LS3 ist ein Leitungsvielfach B und ein Leitungsvielfach I angeschlossen. Beide Leitungsvielfache sind mit der Steuereinrichtung ST der Fernsprechnebenstellenanlage (s. fig. 1) verbunden, dabei dient das Leitungsvielfach B zur Übermittlung von Befehlen von der Steuereinrichtung ST zur Anschlußschaltung TA, TI, während über das Leitungsvielfach I Informationen von der Anschlußschaltung zur Steuereinrichtung ST übermittelt werden. Die Leitungsschnittstelle LS4 dient zum Anschluß einer Anzeigeeinrichtung AZ und zum Anschluß eines Programmierschalters PR. Mit Hilfe des Programmierschalters PR kann der jeweilige Verwendungszweck der Anschlußschaltung (Anschluß einer Datenendeinrichtung-TA bzw. Anschluß einer Datenleitung-TI) eingestellt werden.

Bei einer Verbindung zwischen einem Fernschreiber FS und einer Datenvermittlungsstelle über die Fernsprechnebenstellenanlage ist der Fernschreiber an der Leitung AL und der Anschlußschaltung TA und die Datenvermittlungsstelle über die Leitungen DL an der Anschlußschaltung TI angeschlossen. Die beiden Anschlußschaltungen TA und TI, welche in ihrem Aufbau identisch sind, sind über den Koppelfeldteil KD mit den Leitungen a und b miteinander verbunden.

Auf dem internen Bus-System der Anschlußschaltung TA und TI und auf den Leitungsvielfachen B und I (Steuereinrichtung ST der Fernsprechnebenstellenanlage) findet die Übermittlung von Informationen in paralleler Form statt, während auf den Leitungen a und b und den Leitungen AL und DL die Informationsübertragung seriell durchgeführt wird. Zu diesem Zweck sind die Leitungsschnittstellen LS1 und LS2 mit jeweils einer Anpassungsschaltung AP1 bzw. AP2 verbunden, welche die entsprechende Serien/Parallel- bzw. Parallel/Serien-Umwandlung durchführt.

Bei dem nachstehend erläuterten Verbindungsaufbau wird davon ausgegangen, daß die eine Anschlußschaltung als ankommend und die andere Anschlußschaltung als abgehend belegt wird. Die Bezeichnung "ankommend" und "abgehend" bezieht sich dabei nicht auf die Art der Verbindung bezüglich der Fernsprechnebenstellenanlage sondern auf die Anschlußschaltung TA und TI selbst. Es ist dabei ohne Bedeutung, ob der Verbindungsaufbau durch einen Fernschreiber FS oder durch einen externen Anruf auf der Datenleitung DL veranlaßt worden ist.

Eine Belegung der Anschlußleitung AL bzw. Datenleitung DL erfolgt durch ein entsprechendes Signal, welches von der Leitungsschnittstelle LS1 aufgenommen und an die Steuereinrichtung MP weitergegeben wird. Bei der Auswertung wird durch die Steuereinrichtung MP erkannt, daß die Anschlußschaltung TA bzw. TI ankommend belegt ist. Die Steuereinrichtung MP erzeugt hierauf ein entsprechendes Datenwort, welches über das Bus-System der Leitungsschaltung LS3 übermittelt wird. Von dort gelangt es über das Leitungsvielfach I zur Steuereinrichtung ST der Fernsprechnebenstellenanlage, wo die betreffende Anschlußschaltung TA bzw. TI als ankommend belegt gekennzeichnet wird. Die anschließend auf der Leitung DL eintreffende Wahlinformation gelangt über die Leitungsschnittstelle LS1 zunächst zur Steuereinrichtung MP, von wo sie ebenfalls über die Leitungsschnittstelle LS3 an die Steuereinrichtung ST der Fernsprechnebenstelleanlage weitergegeben wird. Bei dieser Wahlinformation handelt es

0111114

sich beispielsweise um die Rufnummer des gewünschten Teilnehmeranschlusses (FS) der Fernsprechnebenstellenanlage. Ist der gewünschte Teilnehmeranschluß frei, so wird die betreffende Anschlußschaltung TA in der Steuereinrichtung ST als abgehend beelgt gekennzeichnet und auf Veranlassung der Steuereinrichtung ST das Koppelfeld K zum Durchschalten einer Verbindung zwischen der Anschlußschaltung TI und der Anschlußschaltung TA innerhalb des Koppelfeldteils KD veranlaßt.

Außerdem wurde der Anschlußschaltung TA durch die Steuereinrichtung ST über das Leitungsvielfach B eine Information übermittelt, welche der Steuereinrichtung MP mitteilt, daß die betreffende Anschlußschaltung TA abgehend belegt ist. Die Steuereinrichtung MP veranlaßt darauf hin in der Anschlußschaltung TA die Kreuzung der zum Koppelfeldteil KD führenden Leitungen a und b (dies kann ebenso bei einer als ankommend belegten Anschlußschaltung geschehen, die Leitungskreuzung muß lediglich einheitlich innerhalb der Fernsprechnebenstellenanlage durchgeführt werden). Sobald auf den Leitungen AL und DL die Empfangsbereitschaft signalisiert wird, erfolgt eine entsprechende Kennzeichnung der Anschlußschaltungen TA und TI, und zwar in dem jeweiligen Speicher SR. Alle nun auf den Leitungen AL bzw. DL eintreffenden Informationen oder Datenworte werden von der Leitungsschaltung LS1 aufgenommen und auf Veranlassung der Steuereinrichtung MP an die Leitungsschaltung LS2 weitergegeben, worauf diese dann unverändert auf die Leitung a zum Koppelfeldteil KD gelangen. Die auf der Leitung b eintreffenden Informationen oder Datenworte gelangen in umgekehrter Weise auf die Leitung AL bzw. DL.

Sobald auf der Leitung AL oder DL das Auslösesignal eintrifft, wird dieses von der Steuereinrichtung MP aufgenommen, registriert und über die Leitungsschnittstelle LS3 und das Leitungsvielfach I an die Steuereinrichtung ST der Fernsprechnebenstellenanlage übermittelt, welche die Auslösung der Verbindung im Koppelfeldteil KD des Koppelfeldes K veranlaßt.

Bei dem Verbindungsaufbau wurde davon ausgegangen, daß eine Belegung der Fernsprechnebenstellenanlage/die Datenvermitt- durch lungsanlage erfolgt. Ein Verbindungsaufbau von einem Fernschreiberanschluß zur Datenvermittlungsstelle oder zu einem Teilnehmeranschluß der Fernsprechnebenstellenanlage wird ebenfalls in der beschriebenen Weise abgewickelt. Weitere Aufgaben der Anschlußschaltung TA und TI bestehen in der Registrierung Übermittlung von Gebühreninformationen, in der Taktsynchronisation (zum Ausgleich von Phasenverschiebungen ist ein Datenpuffer vorgesehen) und in der Überwachung der Leitungen AL bzw. DL.

Mit Hilfe der Anzeigeeinrichtung AZ können und Betriebs- und Leitungszustände optisch angezeigt werden. Wie bereits erwähnt, kann mit Hilfe der Programmschalter PR beispielsweise die Anschlußschaltung entsprechend markiert werden, und zwar ob sie als Anschlußschaltung TA oder als Anschlußschaltung TI eingesetzt werden soll. Mit Hilfe der Programmschalter PR kann somit der interne Steuerungsablauf der Steuereinrichtung MP beeinflußt werden. Die Befehlsfolge für die Steuereinrichtung MP ist im Speicher SR enthalten, welcher außerdem zur Einspeicherung von Leitung- und Betriebszuständen dienen kann.

An der Steuereinrichtung ST der Fernsprechnebenstellenanlage (s. Fig. 1) ist ein Uhrzeit- und Datumgeber UZ angeschlossen, welcher die Informationen bezüglich Uhrzeit und Datum erzeugt, die zu Beginn einer Verbindung den Teilnehmern zuzuschreiben ist. Die auszusendenden Informationen gelangen von der Steuereinrichtung ST über das Leitungsvielfach B zur Anschlußschaltung TA bzw. TI (s. Fig. 2), wo diese von der Leitungsschnittstelle LS3 aufgenommen und auf Veranlassung der Steuereinrichtung MP der Leitungsschnittstelle LS1 oder auch der Leitungsschnitttstelle LS 2 zugeführt werden. Das Zuschreiben von Uhrzeit und Datum kann nun entweder auf die an der betreffenden Fernsprechnebenstellenanlage angeschlossenen Fernschreibanschlüsse beschränkt sein oder auch zusätzlich auf die Datenleitung DL ausgedehnt werden. Die Einspeisung der auszusendenden Information kann nun entweder in nur einer Anschlußschaltung oder in beiden Anschlußschaltungen geschehen. Im letzteren Fall erfolgt
die Einspeisung dann lediglich in der Leitungsschnittstelle
LS1.

Am Koppelfeldteil KD und an der Steuereinrichtung ST kann
auch eine Auskunfts- und Informationseinrichtung AS angeschlossen sein, welche zu Auskunftszwecken sowohl von Fernschreibanschlüssen FS als auch von der Datenleitung DL erreichbar ist. Die Einrichtung AS teilt einem anrufenden Anschluß auf Anforderung Informationen über bestimmte Anschlüsse, Datenleitungen, usw., mit. Es ist jedoch auch denkbar, diese Einrichtung AS lediglich an der Steuereinrichtung
ST wie den Uhrzeit- und Datumgeber UZ anzuschließen, wobei
die Informationsübermittlung zwischen der Anschlußschaltung
TA bzw. TI und der Steuereinrichtung über die Leitungsschnittstelle LS3 in bereits beschriebener Weise erfolgt.

Wird die Datenvermittlungsanlage für die Vermittlung von Teletex- Verbindungen eingesetzt, dann ist es vorteilhaft, den Informationsspeicher SPS über eine oder mehrere Telex-Verbindungsleitungen TL mit einer öffentlichen Telex-Vermittlungsanlage zu verbinden. In diesem Fall wird der Informationsspeicher SPS auch zur Code- und/oder Geschwindigkeitswandlung herangezogen, da die Informationen bei Telex-Verbindungen und bei Teletex-Verbindungen unterschiedliche Datenformate und Geschwindigkeiten aufweisen. Ankommende Telex-Verbindungen können somit ohne weiteres über den Informationsspeicher SPS einem Teletex-Teilnehmeranschluß FS der Nebenstellenanlage zugeführt werden. Auch in umgekehrter Richtung können Teletex-Nachrichten von einem Teilnehmer der Nebenstellenanlage über den Informationsspeicher SPS in das öffentliche Telex-Netz geleitet werden.

Eine Reihe von Vorteilen bei der Betriebsabwicklung wird durch die Ausstattung des Informationsspeichers mit einem Bedienplatz BP erreicht. Ein derartiger Bedienplatz kann beispielsweise eine Tastatur und eine Druckeinrichtung aufweisen, wobei durch die Druckeinrichtung entweder durch die Tastatur aufgerufene Nachrichten oder sämtliche in den Informationsspeicher SPS einlaufende Nachrichten abgedruckt werden. Aufgrund der Bedeutung oder des Teilnehmeranschlusses für den die betreffende Nachricht bestimmt ist, kann aufgrund des Abdrucks entschieden werden, ob eine Übermittlung der Nachricht über die Vermittlungsanlage an dem Teilnehmeranschluß oder eine Übermittlung des Abdrucks der Nachricht an diesen oder eine andere Stelle erfolgen soll. Die Weitergabe einer Nachricht kann auch an eine andere als ursprünglich in der Nachricht bestimmte Stelle über die Vermittlungsanlage erfolgen, indem über die Tastatur entsprechende Informationen für eine aufzubauende Verbindung eingegeben werden.

Anstelle der Tastatur und der Druckeinrichtung oder zusätzlich zu diesen kann der Bedienplatz auch als Bildschirmarbeitsplatz ausgebildet sein. Mit einem derartig ausgestatteten Bedienplatz kann der Informationsspeicher auch als zentrale Sende- und Empfangsstelle betrieben werden, besonders für solche Stellen, welche über keine eigene Datenendeinrichtung, d. h. keinen eigenen Telex- oder Teletex-Anschluß aufweisen. Ist für den Bedienplatz nur eine einzige Bedienungsperson vorhanden, so ist es u. U. zweckmäßig, bei Benutzung des Bildschirmarbeitsplatzes die Druckeinrichtung zu sperren.

Der Informationsspeicher SPS kann auch als sogenannter Briefkasten betrieben werden, indem im anschlußindividuellen Speicherbereichen für diese bestimmte Nachrichten unabhängig von deren Betriebszustand (frei oder belegt) abgelegt werden und daß diese dann von dem jeweiligen Teilnehmeranschluß abgerufen werden können.

Da der Informationsspeicher SPS ebenso wie eine Teilnehmeranschlußleitung oder wie eine Verbindungsleitung an dem Koppelfeldteil KD angeschlossen ist, muß dieser eine einem hauptanschlußfähigen Endgerät entsprechende Schnittstelle aufweisen. Da die Teilnehmeranschlußleitungen AL und die Datenleitung DL über die Anschlußschaltungen TA bzw. TI am Koppelfeldteil KD und an der Steuereinrichtung ST angeschlossen sind, ist für jede Schnittstelle innerhalb des Informationsspeichers SPS eine derartige Einrichtung, wie sie in Fig. 2 gezeigt wird, ebenfalls vorhanden. Ebenso kann eine derartige Einrichtung (TA, TI) zum Anschluß der Telex-Verbindungsleitungen TL innerhalb des Informationsspeichers SPS vorgesehen sein.

Bei größeren Datenvermittlungsanlagen, d. h. wenn beispielsweise mehr als 50 Teilnehmer an dem Koppelfeldteil KD angeschlossen sind, kann der Informationsspeicher SPS auch durch eine kleine Speichervermittlungsanlage realisiert werden. Der Anschluß einer derartigen Speichervermittlungsanlage erfolgt beispielsweise dadurch, daß die Teilnehmeranschlüsse mit dem Koppelfeldteil KD verbunden werden. Auf den Aufbau und die Wirkungsweise einer Speichervermittlungsanlage wird im Rahmen dieser Beschreibung nicht weiter eingegangen. Eine Beschreibung einer derartigen Speichervermittlungsanlage befindet sich beispielsweise in der Druckschrift "TE KA DE Technische Mitteilungen" 1981 auf den Seiten 5 bis 10.

P 3785
1.11.82
Fs/Me.

Telefonbau und Normalzeit GmbH, Postfach 44 32,
6000 Frankfurt (Main)

1

Schaltungsanordnung für eine Fernsprechvermittlungsanlage, insbesondere Fernsprechnebenstellenanlage mit zusätzlichem Datenverkehr

P a t e n t a n s p r ü c h e :

1. Schaltungsanordnung für eine Fernsprechvermittlungsanlage
mit Fernsprechanschlußschaltungen, Fernsprechleitungsübertragungen, einer Steuereinrichtung und einem Koppelfeld, insbesondere Fernsprechnebenstellenanlage mit zusätzlichem Datenverkehr, wobei die Datenendeinrichtungen
ebenso wie Fernsprechteilnehmer an der Fernsprechnebenstellenanlage angeschlossen und neben den üblichen Leitungsübertragungen für den Fernsprechverkehr besondere
Leitungsübertragungen für den Datenverkehr vorgesehen sind,
welche zur Abwicklung des externen Datenverkehrs mit einer
Datenvermittlungsanlage dienen, wobei in den Leitungsübertragungen für den Datenverkehr Einrichtungen zum Empfang,
zur Umsetzung und Weiterleitung von Leitungszeichen und
Dateninformationen der einen Vermittlungsanlage in die
der anderen Vermittlungsanlage und umgekehrt vorgesehen
sind,
dadurch gekennzeichnet,
daß zum Anschluß von Datenendeinrichtungen (FS) und externen
Datenleitungen (DL) individuelle Anschlußschaltungen (TA,
Tl) vorgesehen sind, welche eine erste Schnittstelle zum
Anschluß einer Datenendeinrichtung (FS) bzw. einer externen Datenleitung (DL), eine zweite Schnittstelle zum
Anschluß an das Koppelfeld (K) und eine dritte Schnittstelle zum Anschluß an die Steuereinrichtung (ST) aufweisen, wobei die zweite und die dritte Schnittstelle gleichartig wie bei den Fernsprechanschlußschaltungen bzw. Fernsprechleitungsübertragungen ausgebildet sind und die Leistungsmerkmale für den Fernsprechverkehr in gleicher Weise für den Datenverkehr zur Verfügung stehen, wobei durch geeignete Mittel sichergestellt ist, daß Verbindungen zwischen Fernsprech- und Datenanschlüssen verhindert sind.

2. Schaltungsanordnung nach Anspruch 1,
   dadurch gekennzeichnet,
   daß erste Betriebskennzeichen für die Einrichtungen für den Fernsprechverkehr und zweite Betriebskennzeichen für die Einrichtungen für den Datenverkehr vorgesehen sind, wobei durch die Steuereinrichtung (ST) durch Überprüfung der Betriebskennzeichen sichergestellt wird, daß nur Einrichtungen mit dem gleichen Betriebskennzeichen miteinander verbunden werden.

3. Schaltungsanordnung nach Anspruch 1,
   dadurch gekennzeichnet,
   daß an einem ersten Teil (KT) des Koppelfeldes (K) die Einrichtungen für den Fernsprechverkehr und an einem zweiten Teil (KD) des Koppelfeldes (K) die Einrichtungen für den Datenverkehr angeschlossen sind, wobei beide Koppelfeldteile von der Steuereinrichtung (ST) eingestellt werden.

4. Schaltungsanordnung nach Anspruch 3,
   dadurch gekennzeichnet,
   daß der zweite Koppelfeldteil (KD) zusammen mit den Anschlußschaltungen (TA, TI) in einer Zusatzbaugruppe untergebracht ist und diese Zusatzbaugruppe an einer Fernsprechnebenstellenanlage angeschlossen ist, die für den Fernsprechverkehr entsprechend geringer ausgebaut ist.

5. Schaltungsanordnung nach Anspruch 1,
   dadurch gekennzeichnet,
   daß die Anschlußschaltungen (TA, TI) gleichartig aufgebaut sind und der jeweilige Verwendungszweck (Anschluß einer Datenendeinrichtung-TA bzw. Anschluß
   einer Datenleitung -TI) an der Anschlußschaltung einstellbar ist.

6. Schaltungsanordnung nach einem der Ansprüche 1 bis 5,
   dadurch gekennzeichnet,
   daß eine Anschlußschaltung (TA, TI) eine Steuereinrichtung (MP) aufweist, deren Bus-System (Steuerleitungen,
   Adressleitungen und Datenleitungen ) mit einer ersten
   Leitungsschnittstelle (LS1) zum Anschluß der internen
   Anschlußleitung (AL) bzw. der externen Datenleitung (DL),
   mit einer zweiten Leitungsschnittstelle (LS2) zum Anschluß an das Koppelfeld (K), mit einer dritten Leitungsschnittstelle (LS3) zum Anschluß an die Steuereinrichtung (ST) der Fernsprechnebenstellenanlage und mit einer
   vierten Leitungsschnittstelle (LS4) für Service-Zwecke
   verbunden ist.

7. Schaltungsanordnung nach Anspruch 6,
   dadurch gekennzeichnet,
   daß in der ersten (LS1) und in der zweiten Leitungsschnittstelle (LS2) für beide Übertragungsrichtungen
   ein Serien/Parallel-Wandler bzw. Parallel/Serien-Wandler
   vorgesehen ist, wobei die auf der internen Anschlußleitung
   (AL) bzw. externen Datenleitung (DL) bzw. vom Koppelfeld (K) seriell eintreffenden Datenworte umgewandelt
   und dem Bus-System in paralleler Form angeboten werden
   bzw. die vom Bus-System in paralleler Form
   eintreffenden Datenworte
   in eine serielle Form zur Aussendung auf die interne
   Anschlußleitung (AL), die externe Datenleitung (DL)
   bzw. zum Koppelfeld (K) umgewandelt werden.

8. Schaltungsanordnung nach Anspruch 6,
   dadurch gekennzeichnet,
   daß die dritte Leitungsschnittstelle (LS3) zur Aussendung von Informationen von der Anschlußschaltung (TA, TI) zur Steuereinrichtung (ST) der Fernsprechnebenstellenanlage und zum Empfang von Befehlen in umgekehrter Richtung dient.

9. Schaltungsanordnung nach Anspruch 7,
   dadurch gekennzeichnet,
   daß die vierte Leitungsschnittstelle (LS4) mit einer optischen Anzeigeeinrichtung (AZ) und einem Programmschalter (PR) verbunden ist.

10. Schaltungsanorndung nach Anspruch 6,
    dadurch gekennzeichnet,
    daß die Steuereinrichtung (MP) der Anschlußschaltung (TA, TI) als Mikroprozessor ausgebildet ist.

11. Schaltungsanordnung nach Anspruch 1,
    dadurch gekennzeichnet,
    daß ein Informationsspeicher (SPS) wie eine Anschlußschaltung (TA, TI) am Koppelfeld (K) angeschlossen ist.

12. Schaltungsanordnung nach Anspruch 11,
    dadurch gekennzeichnet,
    daß der Informationsspeicher (SPS) mit der Steuereinrichtung (ST) der Fernsprechnebenstellenanlage zur Übermittlung von Informationen und Befehlen verbunden ist.

13. Schaltungsanordnung nach Anspruch 1,
    dadurch gekennzeichent,
    daß im Koppelfeld (K) zwischen den Anschlußschaltungen (TA, TI) ein Vollduplex-Verkehr stattfindet.

- 5 -

0111114

14. Schaltungsanordnung nach einem der Ansprüche 1 bis 12,
dadurch gekennzeichnet,
daß die Anschlußschaltungen (TA, TI) jeweils über eine zweiadrige Leitung mit dem Koppelfeld (K) verbunden sind.

15. Schaltungsanordnung nach Anspruch 14,
dadurch gekennzeichnet,
daß bei einer Verbindung zwischen zwei Anschlußschaltungen (TA, TI) in einer der beiden Anschlußschaltungen eine Adernkreuzung stattfindet.

16. Schaltungsanordnung nach einem der Ansprüche 13 bis 15,
dadurch gekennzeichnet,
daß die eine Ader (a) für die eine Übertragungsrichtung und die andere Ader (b) für die andere Übertragungsrichtung benutzt wird.

17. Schaltungsanordnung nach einem der Ansprüche 1 bis 16,
dadurch gekennzeichnet,
daß an der Steuereinrichtung (ST) der Fernsprechnebenstellenanlage ein Uhrzeit- und Datumgeber (UZ) angeschlossen ist, dessen Informationen über die dritte Leitungsschnittstelle (LS3) der Anschlußschaltung (TA, TI) zur Aussendung auf die Anschlußleitung (AL) bzw. Datenleitung (DL) übermittelt werden.

18. Schaltungsanordnung nach einem der Ansprüche 1 bis 16,
dadurch gekennzeichnet,
daß am Koppelfeld (K) und an der Steuereinrichtung (ST) der Fernsprechnebenstellenanlage eine Auskunfts- und Informationseinrichtung (AZ) angeschlossen ist.

19. Schaltungsanordnung nach einem der Ansprüche 11 oder 12,

dadurch gekennzeichnet,

daß der Informationsspeicher (SPS) mit einer externen Datenvermittlungsanlage verbunden ist.

20. Schaltungsanordnung nach einem der Ansprüche 11, 12 oder 19,

dadurch gekennzeichnet,

daß der Informationsspeicher (SPS) durch eine Speichervermittlungsanlage gebildet wird.

21. Schaltungsanordnung nach einem der Ansprüche 11, 12 oder 19,

dadurch gekennzeichnet,

daß an dem Informationsspeicher (SPS) ein Bedienplatz (BP) angeschlossen ist.

22. Schaltungsanordnung nach Anspruch 21, dadurch gekennzeichnet,

daß der Bedienplatz (BP) eine Tastatur und eine Druckeinrichtung aufweist.

23. Schaltungsanordnung nach einem der Ansprüche 21 oder 22,

dadurch gekennzeichnet,

daß der Bedienplatz (BP) als Bildschirmarbeitsplatz ausgebildet ist.

24. Schaltungsanordnung nach einem der Ansprüche 21 bis 23, dadurch gekennzeichnet,

daß durch die Druckeinrichtung sämtliche dem Informationsspeicher (SPS) zugeführte Nachrichten abgedruckt werden.

25. Schaltungsanordnung nach einem der Ansprüche 21 bis 24, dadurch gekennzeichent,

daß bei Benutzung des Bildschirmarbeitsplatzes die Druckeinrichtung gesperrt ist.

**0111114**

26. Schaltungsanordnung nach einem der Ansprüche 21 bis 25,
<u>dadurch gekennzeichnet,</u>
daß der Informationsspeicher (SPS) für bestimmte Teilnehmeranschlüsse der Vermittlungsanlage fest zugeordnete Speicherbereiche aufweist, in welchen unabhängig vom Betriebszustand der Teilnehmeranschlüsse für diese bestimmte Nachrichten abgelegt werden und daß diese vom betreffenden Teilnehmeranschluß abgerufen werden können.

P 3785
1.11.82
Fs/Me.

Fig.1

Fig. 2

0111114

2/2